# FASCICULE DE BREVET EUROPEEN

(11) **EP 1 939 957 B1**
(45) Date de publication et mention de la délivrance du brevet: **04.01.2012**
(21) Numéro de dépôt: 07301532.3
(22) Date de dépôt: 09.11.2007
(51) Int. Cl.: H01M 10/0525

(54) **Traversée étanche pour batterie au lithium, son procédé de fabrication et son utilisation dans une batterie au lithium, et batterie au lithium mettant en oeuvre une telle traversée**
Dichte Durchführung für Lithiumbatterie, Verfahren zu deren Herstellung und deren Einsatz in einer Lithiumbatterie und Lithiumbatterie, bei der eine solche Durchführung angewendet wird
Pressure seal for lithium battery, manufacturing method and use in a lithium battery, and lithium battery implementing such a seal

(30) Priorité: 21.11.2006 FR 0655015
(43) Date de publication de la demande: 02.07.2008
(73) Titulaire: Commissariat à l'Énergie Atomique et aux Énergies Alternatives, 75015 Paris (FR)
(72) Inventeur: Jouanneau-Si-Lardi, Séverine, 38590, Sillans (FR); Mourzagh, Djamel, 38600, Fontaine (FR); Jost, Pierre, 38220, Vizille (FR); Rouault, Hélène, 38420, Le Versoud (FR); Lachau-Durand, Antoine, 18000, Bourges (FR); Nicolas, Olivier, 18340, Arcay (FR)
(74) Mandataire: Vuillermoz, Bruno

(56) Documents cités:
- US-A- 5 821 011
- US-A1- 2001 055 716
- US-A1- 2005 247 379

## Description

### DOMAINE TECHNIQUE

La présente invention concerne les batteries au lithium à haut potentiel, et plus particulièrement l'isolation électrique étanche de telles batteries.

Elle propose une traversée verre-métal associant un verre de type TA23 et un pion métallique réalisé en platine irridié massif dans un corps avantageusement réalisé en acier inoxydable SS304L, qui assure une étanchéité remarquable.

### ETAT ANTERIEUR DE LA TECHNIQUE

Les accumulateurs ou batteries au lithium sont de plus en plus utilisés comme sources d'énergie autonome, en particulier dans les équipements portables, où ils tendent à remplacer progressivement les accumulateurs nickel-cadmium (NiCd) et nickel-hydrure métallique (NiMH).

Cette évolution découle du fait que les performances des accumulateurs au lithium, en termes de densité d'énergie (Wh/kg ou Wh/1), sont largement supérieures à celles des deux filières citées précédemment. Dans le domaine médical, certains équipements, éventuellement implantables, sont désormais équipés d'accumulateurs au lithium.

Dans l'application particulière des implants, des contraintes supplémentaires s'ajoutent, parmi lesquelles une durée de vie accrue (10 ans) et surtout une parfaite étanchéité du système complet sur la durée, associées à un souci de miniaturisation.

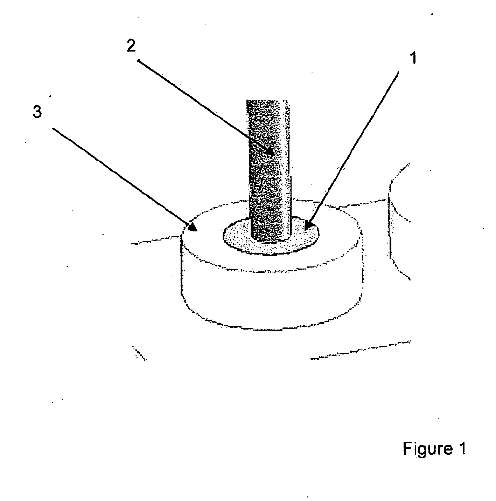

L'étanchéité parfaite d'un tel système est réalisée à ce jour par une traversée verrre-métal comprenant un corps 3, du verre 1 et un pion métallique 2, tel qu'illustré à la figure 1. Cette traversée permet d'assurer l'isolement des deux polarités de la batterie, l'une assurée par le boîtier et l'autre par un pion métallique.

En termes d'enverrage, il doit en théorie exister une compatibilité entre le verre et le pion à enverrer. Une telle compatibilité est réalisée lorsque les coefficients de dilatation thermique respectifs sont proches (inférieures à +/- 2.10⁻⁶/°C).

Selon que le coefficient de dilatation thermique du verre est supérieur, inférieur ou à peu près égal à celui de l'élément métallique, la jonction résultante peut être sous compression, sous tension ou équilibrée, respectivement.

Le verre doit alors également être compatible avec le milieu avec lequel il est en contact. Dans le cas présent, il doit en particulier être insensible à l'attaque par les substances contenues dans la batterie au lithium, à savoir l'électrolyte corrosif (mélange organique de EC (éthylène carbonate), PC (propylène carbonate), DMC (dimùéthylcarbonate), etc., associé à un sel de lithium, en particulier LiPF₆, et le lithium. Des verres couramment utilisés dans cette application sont le TA23 ou le Cabal 12.

Le pion métallique doit également être stable à la fois chimiquement et électrochimiquement. Il en est de même pour le corps métallique.

Lors du process, l'ensemble préforme de verre/pion est généralement soumis à une température donnée, autour de 1.000°C, pour faire fondre la préforme et modifier la viscosité du verre, de manière à ce qu'il s'écoule et forme, une fois refroidi, l'élément de verre lié au pion métallique et à l'anneau du support (Figure 1).

Afin d'augmenter la densité d'énergie embarquée dans l'élément batterie lithium sans accroître ses dimensions, une solution consiste à utiliser un matériau d'électrode positive à plus haut potentiel d'insertion/désinsertion (> 3,9V/Li⁺/Li) par rapport à ceux habituellement utilisés pour les applications implantables (autour de 3V/Li⁺/Li).

Cette condition implique une nouvelle contrainte en termes de stabilité à un potentiel élevé. En effet, le métal utilisé ne doit pas s'oxyder à un tel potentiel, ce qui pourrait entraîner le relargage d'espèces ioniques indésirables à l'intérieur de la batterie. Par ailleurs, ceci pourrait avoir une incidence sur l'étanchéité de la traversée sur de longues durées de vie.

Dans le document WO 03/041191, il est préconisé de réaliser un revêtement (« coating ») mécanique de platine sur un pion compatible avec du Cabal 12 en termes de coefficient de dilatation (par exemple SS446), formant ainsi le coeur de l'élément pion métallique. Toutefois, le pion, même revêtu d'un tel « coating » en platine, peut rester sensible aux potentiels élevés, notamment si le revêtement s'use au cours du temps.

Le document US 5 821 011 illustre la modification de la composition du verre Cabal 12, afin de faire varier le coefficient de dilatation du verre. Le but est d'obtenir des conditions idéales d'enverrage, à savoir des coefficients de dilatation thermique proches (< +/- 2.10⁻⁶/°C) et ainsi de pouvoir procéder à des enverrages avec du platine irridié par exemple. Les Cabal 12 modifiés de coefficient d'expansion thermique allant de 6,8 à 8 10⁻⁶/°C peuvent être associés à du niobium ou du tantale massif, avec un revêtement éventuel de titane. Les Cabal 12 modifiés de coefficient d'expansion compris entre 8 et 9.10⁻⁶/°C peuvent être associés avec du platine, du platine irridié ou du titane.

On a décrit dans le document US 6 759 163 B, une traversée verre-métal réalisée à partir d'éléments de coefficient d'expansion thermique (CET) inhabituel :
- le CET du verre est bien plus bas (compris entre 6,3-6,5.10⁻⁶/°C) que le CET du pion (compris entre 9,4-11,7.10⁻⁶/°C) ;
- le CET du corps est similaire ou plus grand (compris entre 9,5-19.10⁻⁶ /°C) que celui du pion.

Le problème technique que se propose de résoudre la présente invention est donc de fournir de nouvelles formulations de traversée verre-métal, présentant une étanchéité améliorée, notamment dans le contexte des batteries au Lithium à haut potentiel.

### OBJET DE L'INVENTION

Ainsi et selon un premier aspect, l'invention concerne une traversée verre-métal qui se caractérise par le fait que :
- le verre est de type TA23 ; et
- le pion est réalisé à l'aide de platine irridié (90/10) massif.

En tant que pion métallique constituant le pôle positif, il est préconisé selon l'invention d'utiliser du platine iridié massif, constitué d'un alliage de platine et d'iridium à 90/10 en masse, présentant un coefficient CET égal à 8,7.10⁻⁶/°C. Ce matériau est parfaitement inerte chimiquement et électrochimiquement. Selon l'invention, le pion de la traversée est constitué exclusivement de ce matériau.

Le TA23 (laboratoire Sandia), présente un coefficient d'expansion thermique de 6,3.10⁻⁶/°C, pour lequel il a été précédemment démontré qu'il est résistant en milieu électrolytique organique (type EC, PC, DMC) associé à un sel de lithium comme LiPF6, contenant donc potentiellement de l'acide fluorhydrique HF, très corrosif, utilisés pour certaines batteries Li-ion.

Une telle association n'était donc a priori pas évidente, du fait de l'incompatibilité des coefficients d'expansion thermique entre le verre et le pion métallique et au vu des recommandations de l'art antérieur.

En outre, les coefficients d'expansion thermique des deux pions proposés sortent des gammes « idéales » d'enverrage et sont en dehors (CET plus faible ou au contraire bien plus élevé) des domaines de compatibilité définis dans le document US 6 759 163 B.

Une traversée verre-métal selon l'invention intègre avantageusement un corps (constituant le pôle négatif) réalisé en acier inoxydable SS304L (CET 19.10⁻⁶/°C), présentant en outre l'avantage d'être parfaitement stable dans le contexte d'une batterie au lithium à haute performance.

Une traversée verre-métal selon l'invention présente des qualités remarquables:
- une bonne résistivité électrique;
- une grande stabilité vis-à-vis de la corrosion ;
- une étanchéité inférieure ou égale à 10⁻⁸ mbar.l⁻¹.

Ces qualités permettent d'envisager son utilisation en tant qu'isolation électrique étanche dans des accumulateurs au lithium à haut potentiel (≥ à 3.85V), pour des implants médicaux notamment.

L'invention concerne plus particulièrement les batteries contenant un électrolyte ou conducteur ionique constitué d'un sel dont le cation est au moins en partie l'ion lithium (LiClO₄, LiAsF₆, LiPF₆, LiBF₄, LiCH₃SO₃, ...) dans un solvant aprotique (par exemple éthylène carbonate, propylène carbonate, diméthylcarbonate, diéthylcarbonate, méthyléthylcarbonate).

Encore plus avantageusement, la batterie est composée de deux électrodes de matériaux d'insertion/désinsertion du lithium, séparées par un séparateur imbibé d'électrolyte.

Le matériau d'électrode positive est préférentiellement choisi dans le groupe des oxydes lamellaires de type LiMO₂, où M est une combinaison de métaux comprenant au moins un métal de transition, et le matériau d'électrode négative est préférentiellement choisi dans le groupe comprenant le graphite, le lithium ou Li₄Ti₅O₁₂.

Selon un autre aspect, l'invention concerne également un procédé de fabrication d'une traversée verre-métal telle que décrite précédemment. Il s'avère que ce procédé est très simple.

Il comprend les étapes essentielles suivantes :
- assemblage de perle de verre de type TA23, d'un corps avantageusement en acier inoxydable SS304L, et d'un pion en platine iridié (90/10) massif ; en pratique, cette étape est réalisée sur un outillage en graphite.
- chauffage à haute température, avantageusement supérieure à 1.000°C, sous atmosphère réductrice. Cette atmosphère peut être obtenue en présence d'un mélange d'azote hydrogéné.

Avant l'assemblage, il est conseillé de nettoyer les pièces élémentaires pour éliminer toute trace de pollution (particules, résidus d'huile d'usinage...).

Après ce procédé, les traversées sont éventuellement envoyées en traitement de surface, pour éliminer la présence d'oxyde à la surface du corps en acier inoxydable.

Enfin, les traversées sont contrôlées en herméticité, isolement électrique ainsi que pour l'aspect visuel de la perle de verre.

## Revendications

1. Traversée verre-métal constituée de verre (1), d'un pion métallique (2) et d'un corps (3), ***caractérisée* en ce que** :
- le pion (2) est constitué de platine iridié (90/10 en masse) massif présentant un CET de 8,7. 10⁻⁶/°C ;
- le verre (1) est du TA23 de CET 6,3. 10⁻⁶/°C.

2. Traversée verre-métal selon la revendication 1, ***caractérisée* en ce que** le corps (3) est réalisé en un acier inoxydable SS304L.

3. Traversée verre-métal selon l'une des revendications 1 à 2, ***caractérisée* en ce qu'**elle présente une étanchéité inférieure ou égale à 10⁻⁸ mbar.1⁻¹.

4. Procédé de fabrication d'une traversée verre-métal selon l'une des revendications 1 à 3 comprenant les étapes suivantes :
- assemblage de perle de verre en TA23, d'un corps avantageusement en acier inoxydable SS304L, et d'un pion réalisé en platine iridié (90/10) massif ;
- chauffage à haute température, avantageusement supérieure à 1.000°C, sous atmosphère réductrice.

5. Procédé de fabrication d'une traversée verre-métal selon la revendication 4, ***caractérisé* en ce qu'**une fois la traversée réalisée, elle subit un traitement de surface du corps.

6. Utilisation d'une traversée verre-métal selon l'une des revendications 1 à 3 pour assurer l'isolation électrique entre les deux pôles d'une batterie au lithium.

7. Batterie au lithium équipée d'une traversée verre-métal selon l'une des revendications 1 à 3.

8. Batterie au lithium selon la revendication 7, ***caractérisée* en ce qu'**elle contient un électrolyte constitué d'un sel, dont le cation est au moins en partie l'ion lithium dans un solvant aprotique.

9. Batterie au Lithium selon la revendication 8, ***caractérisée*** :
■ en ce que le matériau d'électrode positive est choisi dans le groupe comprenant les oxydes lamellaires de type LiMO₂ où M est une combinaison de métaux comprenant au moins un métal de transition,
■ et en ce que le matériau d'électrode négative est choisi dans le groupe comprenant le graphite, le lithium et l'oxyde Li₄Ti₅O₁₂.

## Claims

1. Glass-metal penetration consisting of glass (1), a metal pin (2) and a body (3), ***characterized* in that**:
- the pin (2) is made from solid platinum/iridium (90/10 by weight) having a CTE of 8.7 × 10⁻⁶/°C;
- the glass (1) is TA23 glass having a CTE of 6.3 × 10⁻⁶/°C.

2. Glass-metal transition according to Claim 1, ***characterized* in that** the body (3) is made from a SS304L stainless steel.

3. Glass-metal transition according to one of Claims 1 and 2, ***characterized* in that** it has a tightness lower than or equal to 10⁻⁸ mbar.1⁻¹.

4. Method for fabricating a glass-metal penetration according to one of Claims 1 to 3 comprising the following steps:
- joining of TA23 type glass bead, a body advantageously made from SS304L stainless steel, and a pin made from solid platinum/iridium (90/10);
- heating to high temperature, advantageously higher than 1000°C, under reducing atmosphere.

5. Method for fabricating a glass-metal penetration according to Claim 4, ***characterized* in that** once the penetration is completed, it undergoes a body surface treatment.

6. Use of the glass-metal penetration according to one of Claims 1 to 3 for the electrical insulation between two poles of a lithium battery.

7. Lithium battery equipped with a glass-metal penetration according to one of Claims 1 to 3.

8. Lithium battery according to Claim 7, ***characterized* in that** it contains an electrolyte consisting of a salt, whereof the cation is at least partly the lithium ion in an aprotic solvent.

9. Lithium battery according to Claim 8, ***characterized***:
■ in that the positive electrode material is selected from the group comprising lamellar oxides of the LiMO₂ type, where M is a combination of metals comprising at least one transition metal,
■ and in that the negative electrode material is selected from the group comprising graphite, lithium and the oxide Li4T₅O₁₂.

## Patentansprüche

1. Glas-/Metalldurchführung, die aus Glas (1), einem Metallstift (2) und einem Körper (3) besteht, **dadurch gekennzeichnet, dass**:
- der Stift (2) aus einer massiven iridiumhaltigen Platte (90/10 in der Masse) besteht, die einen Wärmedehnungskoeffizienten von 8,7. 10⁻⁶/°C aufweist;
- das Glas (1) TA23 mit einem Wärmedehnungskoeffizienten von 6,3. 10⁻⁶/°C ist.

2. Glas-/Metalldurchführung nach Anspruch 1, **dadurch gekennzeichnet, dass** der Körper (3) aus rostfreiem Stahl SS304L hergestellt ist.

3. Glas-/Metalldurchführung nach einem der Ansprüche 1 bis 2, **dadurch gekennzeichnet, dass** sie eine Dichtigkeit von unter oder gleich 10⁻⁸ mbar.1⁻¹ aufweist.

4. Verfahren zur Herstellung einer Glas-/Metalldurchführung nach einem der Ansprüche 1 bis 3, folgende Schritte umfassend:
- Zusammenbringen einer Glasperle aus TA23 mit einem Körpers, der vorteilhafter Weise aus rostfreiem Stahl SS304 L besteht, und einem Stift, der aus einer massiven iridiumhaltigen Platte (90/10) hergestellt ist;
- Erwärmen bei hoher Temperatur, vorteilhafter Weise über 1.000°C, unter Reduktionsatmosphäre.

5. Verfahren zur Herstellung einer Glas-/Metalldurchführung nach Anspruch 4, **dadurch gekennzeichnet, dass**, sobald die Durchführung hergestellt ist, sie einer Oberflächenbehandlung des Körpers unterzogen wird.

6. Verwendung einer Glas-/Metalldurchführung nach einem der Ansprüche 1 bis 3, um die elektrische Isolierung zwischen den beiden Polen einer Lithiumbatterie sicherzustellen.

7. Lithiumbatterie, die mit einer Glas-/Metalldurchführung nach einem der Ansprüche 1 bis 3 ausgestattet ist.

8. Lithiumbatterie nach Anspruch 7, **dadurch gekennzeichnet, dass** sie einen Elektrolyten enthält, der aus einem Salz besteht, dessen Kation zumindest teilweise das Lithiumion in einem aprotischen Lösungsmittel ist.

9. Lithiumbatterie nach Anspruch 8, **dadurch gekennzeichnet, dass**:
■ das Material der Plus-Elektrode aus der Gruppe ausgewählt ist, die lamellare Oxide des Typs LiMO₂ umfasst, wobei M eine Kombination von Metallen ist, die mindestens ein Übergangsmetall umfassen,
■ und das Material der Minus-Elektrode aus der Gruppe ausgewählt ist, die Graphit, Lithium und das Oxid Li₄Ti₅O₁₂ umfasst.
